# EUROPEAN PATENT SPECIFICATION

(11) **EP 3 692 688 B1**
(45) Date of publication and mention of the grant of the patent: **26.03.2025**
(21) Application number: 19742134.0
(22) Date of filing: 28.06.2019
(51) Int. Cl.: H04L 45/50, H04L 45/00

(54) **DEVICE, METHOD AND SYSTEM FOR SENDING OR RECEIVING PACKETS INCLUDING CONTROL INFORMATION**
VORRICHTUNG, VERFAHREN UND SYSTEM ZUM SENDEN ODER EMPFANGEN VON PAKETEN MIT STEUERINFORMATIONEN
DISPOSITIF, PROCÉDÉ ET SYSTÈME POUR ENVOYER OU RECEVOIR DES PAQUETS COMPRENANT DES INFORMATIONS DE CONTRÔLE

(30) Priority: 28.06.2018 US 201862691577 P
(43) Date of publication of application: 12.08.2020
(73) Proprietor: Huawei Technologies Co., Ltd., Shenzhen, Guangdong 518129 (CN)
(72) Inventor: BRYANT, Stewart, Frederick, North Merstham Surrey RH13AA (GB); MALIS, Andrew, G., Shenzhen, Guangdong 518129, (CN); DONG, Jie, 80992 Munich (DE); BUSI, Italo, 80992 Munich (DE)
(74) Representative: Gill Jennings & Every LLP
(86) International application number: PCT/EP2019/067377
(87) International publication number: WO 2020/002624

(56) References cited:
- US-A1- 2009 168 783
- US-A1- 2011 261 812

## Description

### TECHNICAL FIELD

The present disclosure relates to the field of multi-segment (MS) pseudo-wire (PW) switching, and provides a device, method and system for sending and receiving control information. In other words, the device, which also may be called MPLS node, or switching provider edge (S-PE), and the related method and system, enhance the S-PE definition, capabilities, and functions as e.g. defined in RFC 6073, with the capability to switch an ethernet pseudo-wire (PW) segment that uses a PW control word (CW) (as e.g. defined in RFC 4385) with an ethernet PW segment that does not use the CW.

### BACKGROUND

In order to protect ethernet pseudo-wire (PW) packets against wrong equal-cost-multi-path (ECMP) behavior, which may cause out-of-order delivery of payload ethernet frames, the use of PW CW has been recommended in the prior art.

However, service providers may have deployments where a conventional provider edge (PE) device is an old piece of equipment which is not capable of including a CW in Ethernet PW encapsulation. In this case, the CW is not used e.g. as defined in RFC 4448. There are situations where replacing the conventional PE with a new piece of equipment which supports CW for ethernet PW is not acceptable because of economical or operational (e.g. service disruption time) reasons.

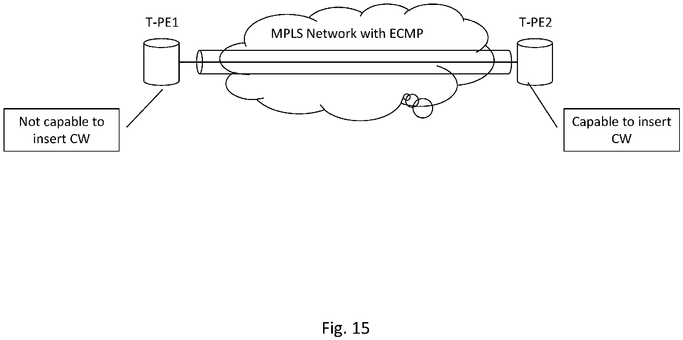

Fig. 15 illustrates a situation in which a PW is setup between two PEs (being terminating provider edges (T-PEs), i.e. T-PE1 and T-PE2) where one of them is an old piece of equipment (i.e. the conventional PE) which is not capable of inserting a CW. In this case, e.g. according to the CW negotiation procedure defined in RFC 4447, the PW is setup without using the CW. Packets sent through this PW may be subject to undesired, e.g. wrong or incorrect ECMP behavior.

That is, the problem to be solved is to find a way to send ethernet PW packets with a CW through an MPLS network using ECMP to avoid the undesired ECMP behavior, when a conventional PE is used.

In the prior art it is suggested to replace the old piece of equipment (the conventional PE) with newer devices which are capable of inserting the CW. However, in many cases this solution may not be practical for both operational and economic reasons as explained before. That is, there is no prior-art solution to this problem and the need for a way to send ethernet PW packets with the CW through an MPLS network, when a PW terminates on a conventional PE.

US 2011/261812 A1 discloses techniques for improving efficiency of encapsulation for packets of a first set of one or more protocols on a packet-pseudowire over a tunnel in a Packet Switched Network (PSN).

US 2009/168783 A1 relates to Multi-Protocol Support Over Ethernet Packet-Switched Networks and discloses techniques for carrying packets through a multi-segment pseudo-wire.

### SUMMARY

In view of the above-mentioned problems and disadvantages, the present disclosure aims to improve the behavior of MPLS networks supporting PWs which terminates on conventional PEs. The present disclosure therefore has the object to provide a multiprotocol label switching, MPLS, node for sending an output packet including control information and payload data, respectively an MPLS, node for receiving an input packet including control information and payload data. The control information can in particular be the CW, but also other types of information can be processed, as it is described below.

An important aspect of the present disclosure is to add a CW in an intermediate switching node (i.e. the above MPLS node, also called switching provider edge, S-PE), to a PW packet transmitted by a first terminating node (e.g. a first terminating provider edge, T-PE1) to a second terminating node of a network (e.g. a second terminating provider edge, T-PE2), where the first terminating node is not able to generate a PW packet including a CW. In other words, the MPLS node generates a CW and adds the CW to the PW packet transmitted by T-PE1 when forwarding it to T-PE2. This can in particular be implemented by changing a forwarding procedure of a conventional MPLS node. The present disclosure also allows for the reverse procedure: for a PW packet received from T-PE2, which includes the CW, the MPLS node removes the CW from the PW packet before forwarding it to T-PE1.

The MPLS node can be placed with respect to the T-PE1 so that the PW packets generated by the T-PE1 are not subject to ECMP before being received by the MPLS node (also in the reverse direction): the added CW protects the PW packets forwarded by the MPLS node to the T-PE2 from incorrect ECMP behaviour (and also in reverse the direction). For instance, the MPLS node can be placed close, i.e. one hop away, at the MPLS layer (typically physically co-located), to the T-PE1. Alternatively, the MPLS node can be placed multiple hops away at the MPLS or PW layer, as long as no ECMP is not used within the MPLS network(s) forwarding the PW packets from the T-PE1 to the MPLS node.

The present disclosure is based on the observation that, for example in some conventional MPLS networks, T-PE1 operates in the same way, regardless of whether the PW is a single-segment (SS) PW or a MS-PW, as defined in RFC 6073: T-PE1 signals SS-PW with T-PE2 using targeted label distribution protocol (T-LDP), as defined in RFC 4447. T-PE1 can be configured to signal a PW segment with S-PE1, as if it were T-PE2 using T-LDP, following the procedures defined in RFC 6073. T-PE1 is capable of setting the PW time to live (PW-TTL) value (i.e. the time to live, TTL, value of the PW label stack entry (LSE)) for ethernet PW packets to a proper value that allows the ethernet frames to be forwarded on the attachment circuit (AC), as defined in RFC 3985 (section 1.4), on T-PE2 (e.g. with PW-TTL>2): this can be done either via administrative configuration or though T-LDP information.

The Attachment Circuit may be a physical or virtual circuit attaching a provider edge to an end device, such as a Costumer Edge. The attachment Circuit may be, for example, a Frame Relay DLCI, an ATM VPI/VCI, an Ethernet port, a VLAN, a PPP connection on a physical interface, a PPP session from an L2TP tunnel, or an MPLS LSP.

The concept of the present disclosure however can also be used if MS-PW dynamic signalling, as e.g. defined in RFC 7267, is used to setup an MS-PW by using the MPLS node, or if a static configuration is used, instead of T-LDP, on either one or two PW segments switched at the MPLS node.

In a further important aspect, the present disclosure allows for using virtual circuit connectivity verification (VCCV) packets, i.e., packets carrying VCCV messages as defined in RFC 5085 (for instance in section 3), to monitor the forwarding of the PW packets between the T-PE1 and the T-PE2. In this case, since the MPLS node modifies the format of the forwarded PW packets (by adding/removing the CW), also the format of the forwarded VCCV packets can be modified. For simplicity, the present disclosure will focus on the case where, when VCCV is used, control channel (CC) Type 1, as defined in RFC 5085 (section 5.1.1), can be used on the PW segment with the CW. The present disclosure is however not limited to this particular configuration and it also allows for using other CC Types on the PW segment with the CW.

The CC type defines the format used to encapsulate VCCV messages into packets sent over a PW segment. Different CC types define different possible formats used to encapsulate VCCV messages. The packets may be labelled packets. A labelled packet is a packet including a payload and a label stack.

The different CC Types may be:
- CC type 1: in this case the VCCV packet includes the VCCV message, a control information (ACH) immediately following the bottom of the label stack and the label stack itself, which is the same that is used to send PW packets over the PW segment;
- CC type 2: in this case the VCCV packet includes at least the VCCV message and a Router Alert Label - Label Stack Entry (RAL LSE) is inserted above the PW LSE of the label stack that is used to send PW packets over the PW segment;
- CC type 3: in this case the VCCV packet includes at least the VCCV message and the label stack itself, which is the same that is used to send PW packets over the PW segment with the PW-TTL set to a proper value such that it expires at the terminating node (T-PE) the VCCV packet is targeted to;
- CC type 4: in this case the VCCV packet includes the VCCV message, a control information (ACH) immediately following the bottom of the label stack and a Generic Associated Channel Label (GAL) LSE is inserted at the bottom of the label stack that is used to send PW packets over the PW segment.

It is also observed that, for example in some conventional MPLS networks, if T-PE1 supports PW VCCV, it can support at least CC Type 3, as defined in RFC 5085 (section 5.1.3), or CC

Type 4, as defined in RFC 7708 (section 3). If T-PE1 supports CC Type 3, for instance, it can be capable of setting the PW-TTL value for the VCCV packets to a proper value that allows the VCCV packets to be recognized by T-PE2 by PW-TTL expiry (e.g. PW-TTL=2): this could be done either via administrative configuration or though T-LDP information.

S-PE can, for instance, be manually configured to switch between the two PW segments, following the procedure described in RFC 6073.

If T-PE2 supports VCCV, it can be configured to always advertise support for CC type 1. This would allow simplifying the VCCV switching process since CC type 1 is always used on the PW segment with CW.

According to the present disclosure, variations are defined to cover also cases where some of the above observations are not satisfied:
If T-PE1 is not capable to properly set the PW-TTL value for both VCCV and user data packets, a PW TTL-bypass mode can be administratively configured at the S-PE. When this mode is enabled on a given MS-PW, S-PE1 does not decrement the PW-TTL of all the forwarded packets for that MS-PW (Ethernet PW and VCCV packets): in this way, all these packets can be still delivered to T-PE2 even if T-PE1 sets the PW-TTL value as if the MS-PW was a SS-PW.

If T-PE1 is not capable to properly set the PW-TTL value only for the OAM packets (in particular when using CC Type 3), a VCCV TTL-bypass mode can be administratively configured at the S-PE. When this mode is enabled on a given MS-PW, the S-PE1 does not decrement the PW-TTL only of the VCCV packets for that MS-PW: In this way, VCCV packets can be delivered to T-PE2 even if T-PE1 sets the PW-TTL value to 1.

If T-PE1 supports only CC Type 2, as defined in RFC 5085 (section 5.1.2), a VCCV stitching for CC Type 2 can be administratively configured at the S-PE.

Although the application of the present disclosure is in particular suitable for ethernet PWs, the procedures are generally applicable to any PW for which the use of CW is optional.

The present disclosure has the object to provide a method for operating the above device, and a system comprising said device.

This object is achieved by the solution provided in the enclosed independent claims. Advantageous implementations of the present disclosure are further defined in the dependent claims.

A first aspect provides a multiprotocol label switching, MPLS, node according to claim 1, for sending an output packet including control information and payload data, wherein the MPLS node is configured to receive an input packet including the payload data, from a first pseudo-wire segment; modify an encapsulation format of the payload data of the input packet to generate the output packet; and send the output packet to a second pseudo-wire segment.

By modifying the encapsulation format of the payload data of the input packet to generate the output packet, the MPLS node ensures that control information can be inserted in or removed from the output packet. VCCV packets can also be processed in the MPLS node.

The MPLS node can be deployed in the network one hop away, at the MPLS layer, from e.g.

T-PE1, which does not support control information.

In particular, the input/output packets can be data packets (carrying an ethernet frame) and control packets (e.g. VCCV packets, where the payload is an OAM frame); includes an associated channel header (ACH) of a control packet (in this case modification of the encapsulation is inserting the ACH).

Preferably, encapsulation is a network principle used to enclose a protocol and transport it in the form of a tunnel over another protocol.

The output packet can in particular be an output labeled packet, including a payload and one or more label stack entries, e.g. according to RFC 3032.

The input packet can in particular be an input labeled packet, including a payload and one or more label stack entries, e.g. according to RFC 3032.

In a labelled packet, the top of the label stack appears earliest in the packet, the bottom appears latest, and the payload immediately follows the bottom of the label stack, e.g. according to RFC 3032.

The control information can e.g. be an associated channel header (ACH), e.g. in case of VCCV control packets

The payload data can e.g. be an ethernet frame in case of a data packet, or OAM data in case of a control packet.

The modification of the encapsulation of the input packet comprises generating the control information and adding at least the control information to the input packet to generate the output packet.

This ensure that control information can be generated by the MPLS node and included in the output packet.

Adding the control information to the input packet further includes adding the control information following the bottom of the label stack, immediately following the bottom of the label stack, of the input packet; wherein the control information includes an associated channel header, ACH.

The swapping operation to swap the pseudo-wire label from the input packet to the output packet can in particular be defined according to RFC6073 and RFC3031.

The bottom of the label stack in particular is a last label of the label stack, counting from top to bottom. In other words, the control information is added at an end of the label stack of the input packet.

In a further implementation form of the first aspect, the input packet is a VCCV packet, and the output packet is a VCCV packet.

This ensures that the MPLS node also can properly forward control packets, such as VCCV packets.

The VCCV packet can in particular be defined according to RFC5085.

Generating the output packet includes swapping a pseudo-wire label from the input packet to the output packet; removing a generic associated channel label, GAL, from the input packet, and setting the S-bit of the pseudo-wire label stack entry of the output packet; wherein the control information includes an associated channel header, ACH.

This ensures that the MPLS node is capable of VCCV stitching for CC type 4.

More specifically, when the GAL is removed, the new bottom of the label stack becomes the PW label stack entry. This is the label stack entry at which the S-bit needs to be set.

The GAL is defined in RFC 5586 as a special label value, i.e., value 13, to indicate that an ACH immediately follows the bottom of the label stack and in the context of CC Type 4, it is used at the bottom of the label stack to indicate that the packet is a VCCV packet, as described in RFC 7708 (section 3).

The S-bit of an MPLS label stack entry of the output packet can in particular be set, for instance to 1, to indicate the label stack entry at the bottom of the label stack, as defined according to RFC3032.

A second aspect provides a multiprotocol label switching, MPLS, node according to claim 3, for receiving an input packet including control information and payload data, wherein the MPLS node is configured to receive the input packet including the payload data from a second pseudo-wire segment; modify an encapsulation format of the payload data of the input packet to generate an output packet; and send the output packet to a first pseudo-wire segment.

The modification of the encapsulation of the input packet comprises removing at least the control information from the input packet to generate the output packet.

In a further implementation form of the second aspect, the input packet is a virtual circuit connectivity verification, VCCV, packet, and the output packet is a VCCV packet.

Removing the control information from the input packet further includes removing the control information following the bottom of the label stack of the input packet; wherein the control information includes an associated channel header, ACH.

Generating the output packet includes swapping a pseudo-wire label from the input packet to the output packet, adding a generic associated channel label, GAL, to the input packet, and clearing the S-bit of the pseudo-wire label stack entry of the input packet; and wherein the control information includes an associated channel header, ACH.

The MPLS node of the second aspect and its implementation forms include the same advantages as the MPLS node according to the first aspect and its implementation forms.

A third aspect provides a multiprotocol label switching, MPLS, system comprising a first pseudo-wire segment, a second pseudo-wire segment and an MPLS node according to the first aspect or any one of its implementation forms, or an MPLS node according to the second aspect or any one of its implementation forms.

The system of the third aspect and its implementation forms include the same advantages as the device according to the first aspect and its implementation forms.

A fourth aspect provides a method for sending an output packet including control information and payload data according to claim 6, the method including the steps of receiving, by an multiprotocol label switching, MPLS, node, an input packet including the payload data, from an first pseudo-wire segment; modifying, by the MPLS node, an encapsulation format of the payload data of the input packet to generate the output packet; and sending, by the MPLS node, the output packet to a second pseudo-wire segment.

The modification of the encapsulation of the input packet comprises generating the control information; and adding at least the control information to the input packet to generate the output packet.

Generating the output packet further includes swapping a pseudo-wire label from the input packet to the output packet; and adding the control information to the input packet further includes adding the control information following the bottom of the label stack of the input packet; wherein the control information includes an associated channel header, ACH.

In a further implementation form of the fourth aspect, the input packet is a virtual circuit connectivity verification, VCCV packet, and the output packet is a VCCV packet.

Adding the control information to the input packet further includes adding the control information following the bottom of the label stack of the input packet; and wherein the control information includes an associated channel header, ACH.

The method of the fourth aspect and its implementation forms include the same advantages as the device according to the first aspect and its implementation forms.

A fifth aspect provides a method for receiving an input packet including control information and payload data according to claim 7,

the method including the steps of receiving, by a multiprotocol label switching, MPLS, node, the input packet including the payload data from a second pseudo-wire segment; modifying, by the MPLS node, an encapsulation format of the payload of the input packet to generate an output packet; and sending, by the MPLS node, the output packet (104) to a first pseudo-wire segment).

The modification of the encapsulation of the input packet comprises removing at least the control information from the input packet to generate the output packet.

In a further implementation form of the fifth aspect, the input packet is a virtual circuit connectivity verification, VCCV, packet, and the output packet is a VCCV packet.

Removing the control information from the input packet further includes removing the control information following the bottom of the label stack of the input packet; wherein the control information includes an associated channel header, ACH.

Generating the output packet includes swapping a pseudo-wire label from the input packet to the output packet, adding a generic associated channel label, GAL, to the input packet, and clearing the S-bit of the pseudo-wire label stack entry of the input packet; and wherein the control information includes an associated channel header, ACH.

The method of the fifth aspect and its implementation forms include the same advantages as the device according to the first aspect and its implementation forms.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above-described aspects and implementation forms of the present disclosure will be explained in the following description of specific embodiments in relation to the enclosed drawings, in which
- FIG. 1: shows a schematic view of a device according to an embodiment.
- FIG. 2: shows another schematic view of a device according to an embodiment.
- FIG. 3: shows a schematic view of a device according to an embodiment in more detail.
- FIG. 4: shows a schematic view of a device according to an embodiment in more detail.
- FIG. 5: shows a schematic view of a device according to an embodiment in more detail.
- FIG. 6: shows a schematic view of a device according to an embodiment in more detail.
- FIG. 7: shows a schematic view of a device according to an embodiment in more detail.
- FIG. 8: shows a schematic view of a device according to an embodiment in more detail.
- FIG. 9: shows a schematic view of a device according to an embodiment in more detail.
- FIG. 10: shows a schematic view of a device according to an embodiment in more detail.
- FIG. 11: shows a schematic view of a system according to an embodiment.
- FIG. 12: shows a schematic view of another system according to an embodiment.
- FIG. 13: shows a schematic view of a method according to an embodiment.
- FIG. 14: shows a schematic view of a method according to an embodiment.
- FIG. 15: shows a schematic view of an MPLS network according to the prior art.

### DETAILED DESCRIPTION OF EMBODIMENTS

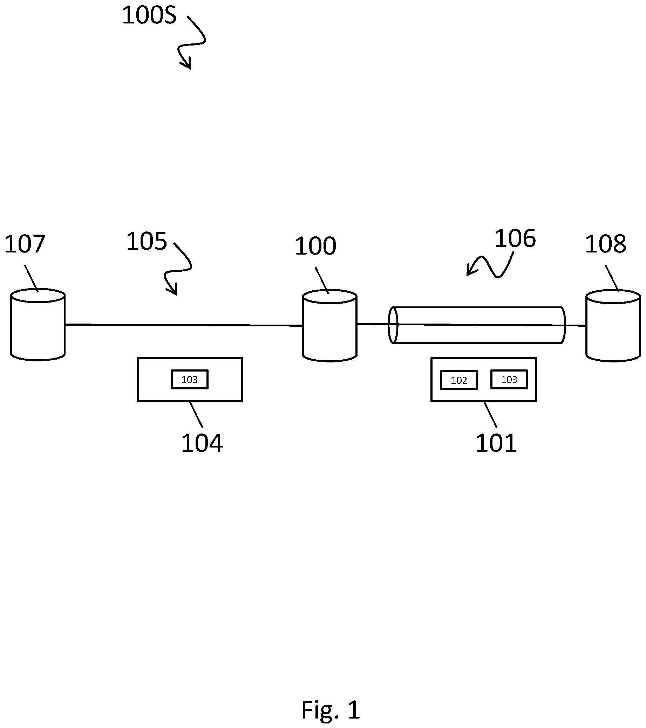

Fig. 1 shows an MPLS node 100. The MPLS node 100 is for sending an output packet 101 including control information 102 and payload data 103. The MPLS node 100 is configured to receive an input packet 104 including at least the payload data 103, from a first pseudo-wire segment 105; modify an encapsulation format of the payload data 103 of the input packet 104 to generate the output packet 101; and send the output packet 101 to a second pseudo-wire segment 106.

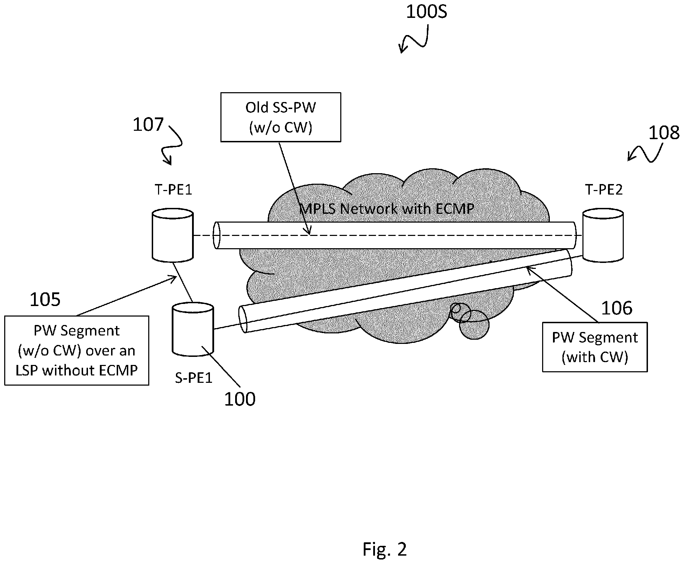

As it is also illustrated in Fig. 2, the first pseudo-wire segment 105 relates to a first terminating node T-PE1 107 (that is, the first pseudo-wire segment 105 terminates on T-PE1 107), and the second pseudo-wire segment 106 relates to a second terminating node T-PE2 108 (that is, the second pseudo-wire segment 106 terminates on T-PE2 108). T-PE1 can be a device which is not capable of including a CW in ethernet PW encapsulation, T-PE2 can be a device which is capable to use the CW for ethernet PW encapsulation. The MPLS node 100 can in particular be S-PE as defined above and may also be called S-PE1. The MPLS node 100 can be added to the network with minimum or no service disruption and PW redundancy, as defined in RFC 6718 or RFC 7771, can be used to move the traffic from an old SS-PW without the CW to the new MS-PW with the CW on the PW segment that passes through the MPLS network.

In particular, the modification of the encapsulation of the input packet 104 comprises generating the control information 102 and adding at least the control information 102 to the input packet 104 to generate the output packet 101.

Since the MPLS node 100 can operate in a forward and/or in a backward manner, the MPLS node 100 is additionally or alternatively for receiving an input packet 101 including control information 102 and payload data 103. In this case, the MPLS node 100 is configured to receive the input packet 101 including the control information 102 and the payload data 103 from a second pseudo-wire segment 106; modify an encapsulation format of the payload data 103 of the input packet 101 to generate an output packet 104; and send the output packet 104 to a first pseudo-wire segment 105. More specifically the modification of the encapsulation of the input packet 101 comprises removing at least the control information 102 from the input packet 101 to generate the output packet 104.

The device 100 as shown in Fig. 2 includes all features and functionality of the device 100 as described in view of Fig. 1. To this end, similar features are labelled with similar reference signs. All features that are additionally described in view of Fig. 2 and below are optional features.

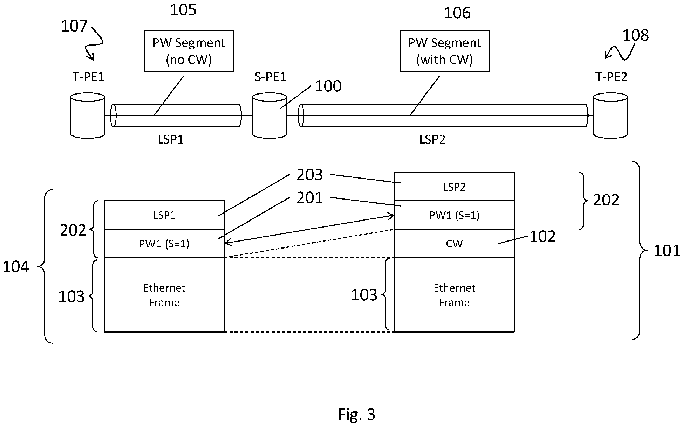

FIG. 3 shows a schematic view of the MPLS node 100 according to an embodiment. In view of Fig. 3 it is now going to be described in detail, how the control information 102 is generated and added to the output packet 101, in a case in which the control information is a CW. This procedure is also called CW stitching.

The CW stitching procedure is performed by the MPLS node 100 (i.e. S-PE1 100) on ethernet PW packets the node 100 is forwarding.

With a reference to Fig. 3, the S-PE1 100 performs the following operations, in the direction from T-PE1 105 to T-PE2 106:
1. S-PE1 100 pops the MPLS label stack entry (LSE) of the LSP from T-PE1 105 to S-PE1 100, if not PHP-ed by the penultimate LSR.
2. S-PE1 100 swaps the PW label 201 (and decrements the PW-TTL).
3. S-PE1 100 adds the CW 102 immediately following the bottom of the label stack 202.
4. S-PE1 100 pushes the MPLS LSE for the LSP to T-PE2 106, unless this LSP is a single-hop PHP-ed LSP.

In the opposite direction, S-PE1 100 can perform the following operations:
1. S-PE1 100 pops the MPLS LSE for the LSP from T-PE2 106 to S-PE1 100, if not PHP-ed by the penultimate LSR.
2. S-PE1 100 swaps the PW label 201 (and decrements the PW-TTL).
3. S-PE1 100 removes the CW 102, which is located immediately following the bottom of the label stack 202.
4. S-PE1 100 pushes the MPLS LSE for the LSP to T-PE2 106, unless this LSP is a single-hop PHP-ed LSP.

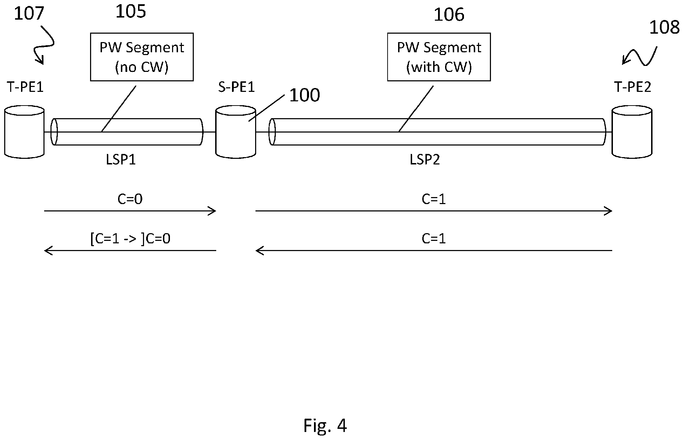

In view of Fig. 4, optional exchange of signaling information between T-PE1 105, S-PE1 100 and T-PE2 106 for CW stitching is going to be described.

As it is shown in Fig. 4, S-PE1 100 negotiates CW capabilities with T-PE1 105 and T-PE2 106 following similar procedures as defined in RFC 4447 and RFC 6073. An exception to the procedures defined in RFC 6073 is that S-PE1 100, when signaling one PW segment, will always behave as if the CW is supported on the other PW segment.

This allows S-PE1 100 to negotiate different CW capabilities on different PW segments as well as to enable CW towards any T-PE that supports CW insertion.

If the same CW capabilities are negotiated on both PW segments 105, 106, then S-PE1 100 will behave as specified in RFC 6073. CW stitching, as defined according to the present disclosure, is enabled if and only if different CW capabilities are negotiated on the two PW segments 105, 106.

Fig. 4 in particular shows an example of how CW capabilities are negotiated. T-PE1 105 will send a T-LDP Label Mapping message with c=0 and T-PE2 106 will send a T-LDP Label Mapping message with C=1, based on the procedures defined in section 6.2 of RFC 4447.

After S-PE1 100 receives the T-LDP Label Mapping message (with c=1) from T-PE2 106, it can send a T-LDP Label Mapping message back to T-PE2 106 (with c=1), following the procedures defined in section 6.2 of RFC 4447, and a T-LDP Label Mapping message to T-PE1 105 (with c=1), following the procedures of RFC 6073.

After S-PE1 100 receives the T-LDP Label Mapping message (with c=0) from T-PE1 105, it can send a T-LDP Label Mapping message to T-PE2 106 (with c=1), as if it has received c=1 from T-PE1 105. It can also send a T-LDP Label Mapping message back to T-PE1 105 with c=0, following the procedures defined in section 6.2 of RFC 4447.

If S-PE1 100 receives the T-LDP Label Mapping message (with c=0) from T-PE1 105 after having sent a T-LDP Label Mapping message with c=1 to T-PE1 105, a label withdraw message needs to be sent to T-PE1 105 before sending another label mapping message with c=0, as specified in section 6.2 of RFC 4447.

When the MS-PW is completely setup, T-PE1 105 is configured not to insert CW, T-PE2 106 is configured to insert CW, and S-PE1 100 is configured to stitch the CW between the two PW segments.

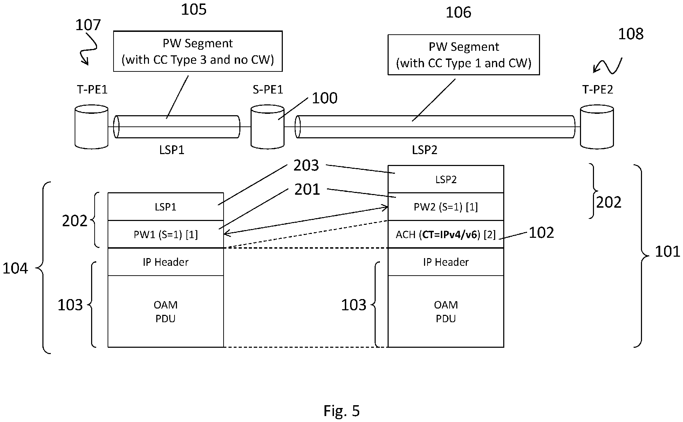

In view of Figs. 5 to 10, VCCV stitching procedures are now going to be described.

When CW stitching is enabled, VCCV packets that are sent on the two PW segments would have different formats. In order to enable end-to-end OAM, S-PE1 100 needs to be capable to perform VCCV stitching.

For simplicity and explanation purposes only, it is assumed a configuration where CC Type 1 is used on the PW segment that uses the CW. Clearly, the skilled person will understand that the present disclosure is not limited to this case only but has validity also if any other CC Type is used on the PW segment that uses the CW.

In the description of the configurations referred to in this disclosure CC of the types 2 to 4 are used on the PW segment that does not use the CW. Thus, different VCCV stitching procedures are defined in the present disclosure, depending on the CC Type supported by the T-PE not supporting the CW (e.g. T-PE1 105).

The VCCV stitching procedure is performed by S-PE1 100 on the VCCV packets it is forwarding.

In the traffic direction from T-PE2 106 and T-PE1 105, CC Type 1 is used: S-PE1 100 can distinguish between VCCV and ethernet PW packets by looking at the first nibble immediately following the bottom of the label stack which identifies either an associated channel header, ACH or a CW:
- Ethernet PW packets are received with the CW: these packets need to be forwarded following the rules defined above, in particular in view of Figs, 1 to 4.
- VCCV packets targeted at S-PE1 100 are received with the ACH and the PW-TTL=1: these packets should be processed by S-PE1 100 and not forwarded.
- Other VCCV packets are received with the ACH and with a PW-TTL value greater than 1: these packets need to be forwarded following the rules defined in the following sections.

In the traffic direction from T-PE1 105 and T-PE2 106, the rules used to distinguish VCCV packets from ethernet PW packets depend from the CC Type used on the PW segment without the CW.

In the following, VCCV stitching for CC Type 3 is going to be described, in particular in view of Fig. 5.

In case CC Type 3 is used on the PW segment not using the CW, VCCV stitching needs to translate between CC Type 3 (without the CW) and CC Type 1. It is to be noted that when CC Type 3 is used on PW segments not using the CW, only IP-based connectivity verification (CV) types can be supported.

In the context entire disclosure, CV types indicate which VCCV protocol is in use and whether the VCCV protocol encapsulation into a VCCV message is IP based or ACH based. These are defined in RFC 5085, section 4. In other words, CV types represent the different type of VCCV protocols. IP-based CV types require the VCCV messages to be encapsulated into an IP packet before being encapsulated into a VCCV packet. ACH-based CV types requires the VCCV messages to be directly encapsulated into a VCCV packet which is using the ACH control channel without being encapsulated into an IP packet.

In the traffic direction from T-PE1 105 and T-PE2 106, S-PE1 100 can distinguish VCCV and ethernet PW packets by looking at the PW-TTL value:
- Ethernet PW packets are received with a PW-TTL value exceeding the PW-TTL distance from S-PE1 100 to T-PE2 106 (e.g. TTL>2): these packets need to be forwarded following the rules defined above, in particular in view of Figs, 1 to 4.
- VCCV packets targeted at S-PE1 100 are received with PW-TTL=1: these packets should be processed by S-PE1 100 and not forwarded.
- Other VCCV packets are received with a PW-TTL value greater than 1 and not exceeding the PW-TTL distance to T-PE2 106 (e.g. TTL=2): these packets need to be forwarded following the rules defined in this section, i.e. described in view of Fig. 5.

With a reference to Fig. 5, S-PE1 100 performs the following operations, in the direction from T-PE1 105 to T-PE2 106:
1. S-PE1 100 pops the MPLS LSE of the LSP from T-PE1 105 to S-PE1 106, if not PHP-ed by the penultimate LSR.
2. S-PE1 100 swaps the PW label 201 (and decrements the PW-TTL).
3. S-PE1 100 adds the ACH 102 immediately following the bottom of the label stack (setting the ACH Channel Type based on the IP version field of the encapsulated IP packet).
4. S-PE1 100 pushes the MPLS LSE for the LSP to T-PE2 106, unless this LSP is a single-hop PHP-ed LSP.

S-PE1 100 can understand the IP version field of the encapsulated IP packet by looking at the first nibble immediately following the bottom of the label stack of the received packet 104.

In the opposite direction, S-PE1 100 performs the following operations:
1. S-PE1 100 pops the MPLS LSE for the LSP from T-PE2 106 to S-PE1 100, if not PHP-ed by the penultimate LSR.
2. S-PE1 100 swaps the PW label 201 (and decrements the PW-TTL).
3. S-PE1 100 removes the ACH 102, which is located immediately following the bottom of the label stack.
4. S-PE1 100 pushes the MPLS LSE for the LSP to T-PE1 105, unless this LSP is a single-hop PHP-ed LSP.

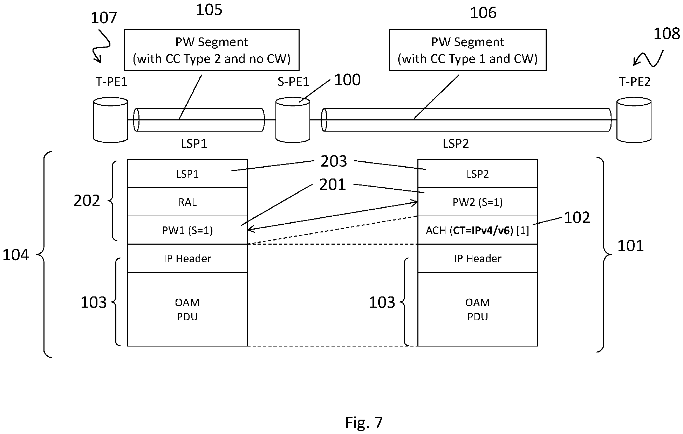

In the following, VCCV stitching for CC Type 2 is going to be described, in particular in view of Fig. 7.

This capability needs to be administratively enabled on S-PE1 100, if and only if T-PE1 105 is capable to support only CC Type 2 and therefore this is the only option to maintain VCCV support on the PW between T-PE1 105 and T-PE2 106.

In the traffic direction from T-PE1 105 and T-PE2 106, S-PE1 100 can distinguish VCCV and Ethernet PW packets by looking at the router alter label, RAL, LSE right above the PW LSE:
- Ethernet PW packets are received without a RAL LSE: these packets need to be forwarded following the procedures defined above (in particular in view of Figs. 1 to 4).
- VCCV packets targeted at S-PE1 100 are received with the RAL LSE and with the PW-TTL=1: these packets should be processed by S-PE1 100 and not be forwarded.
- Other VCCV packets are received with the RAL LSE and with the PW-TTL>1: these packets need to be forwarded following the rules defined in this section, i.e. in view of Fig. 7.

With a reference to Fig. 7, S-PE1 100 performs the following operations, in the direction from T-PE1 105 to T-PE2 106:
1. S-PE1 100 pops the MPLS LSE of the LSP from T-PE1 105 to S-PE1 100, if not PHP-ed by the penultimate LSR.
2. S-PE1 100 removes the RAL right above the PW LSE 201.
3. S-PE1 100 swaps the PW label 201 (and decrements the PW-TTL).
4. S-PE1 100 adds the ACH 102 immediately following the bottom of the label stack 202 (setting the ACH Channel Type based on the IP version field of the encapsulated IP packet).
5. S-PE1 100 pushes the MPLS LSE for the LSP to T-PE2 106, unless this LSP is a single-hop PHP-ed LSP.

With a reference to Fig. 7, S-PE1 100 performs the following operations, in the direction from T-PE2 106 to T-PE1 105:
1. S-PE1 100 pops the MPLS LSE of the LSP from T-PE2 106 to S-PE1 100, if not PHP-ed by the penultimate LSR.
2. S-PE1 100 removes the ACH 102 immediately following the bottom of the label stack.
3. S-PE1 100 swaps the PW label 201 (and decrements the PW-TTL).
4. S-PE1 100 pushes the RAL LSE right above the PW LSE 201.
5. S-PE1 100 pushes the MPLS LSE for the LSP to T-PE1 105, unless this LSP is a single-hop PHP-ed LSP.

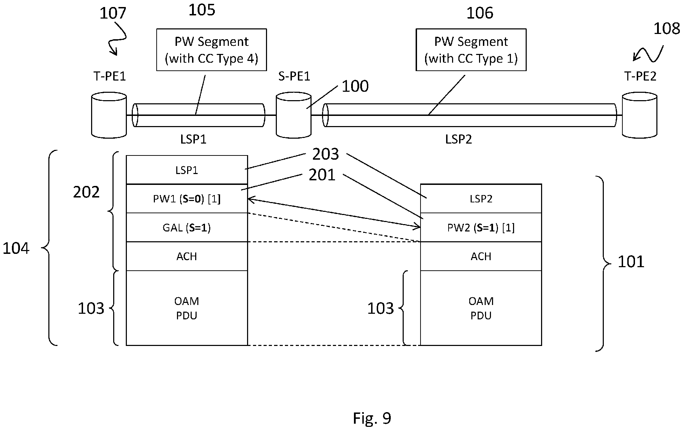

In the following, VCCV stitching for CC Type 4 is going to be described, in particular in view of Fig. 9.

In case that CC Type 4 is used on the PW segment not using the CW, VCCV stitching needs to translate between CC Type 4 and CC Type 1. It is to be noted that in this case both IP-based and ACH-based CV types can be supported.

In the traffic direction from T-PE1 105 and T-PE2 106, S-PE1 100 can distinguish VCCV and Ethernet PW packets by looking at GAL LSE right after the PW LSE:
- Ethernet PW packets are received without a GAL LSE: these packets need to be forwarded following the rules defined above, in particular in view of Figs, 1 to 4.
- VCCV packets targeted at S-PE1 100 are received with the GAL LSE and with the PW-TTL=1: these packets should be processed by S-PE1 100 and not be forwarded.
- Other VCCV packets are received with the GAL LSE and with a PW-TTL value greater than 1: these packets need to be forwarded following the rules defined in this section i.e. in view of Fig. 9.

With a reference to Fig. 9, S-PE1 100 performs the following operations, in the direction from T-PE1 105 to T-PE2 106:
1. S-PE1 100 pops the MPLS LSE of the LSP from T-PE1 105 to S-PE1 100, if not PHP-ed by the penultimate LSR.
2. S-PE1 100 swaps the PW label 201 (and decrements the PW-TTL).
3. S-PE1 100 removes the GAL LSE at the bottom of the label stack 202.
4. S-PE1 100 sets the S-bit of the PW LSE 201 since the PW LSE 201 becomes the new bottom of the label stack 202.
5. S-PE1 100 pushes the MPLS LSE for the LSP to T-PE2 106, unless this LSP is a single-hop PHP-ed LSP.

In the opposite direction, S-PE1 100 performs the following operations:
1. S-PE1 100 pops the MPLS label stack entry (LSE) for the LSP from T-PE2 106 to S-PE1 100, if not PHP-ed by the penultimate LSR.
2. S-PE1 100 swaps the PW label 201 (and decrements the PW-TTL).
3. S-PE1 100 inserts the GAL LSE at the bottom of the label stack.
4. S-PE1 100 clears the S-bit of the PW LSE 201 since the PW LSE is no longer at the bottom of the label stack 202.
5. S-PE1 100 pushes the MPLS LSE for the LSP to T-PE2 106, unless this LSP is a single-hop PHP-ed LSP.

The above procedures regarding CC Type 2, 3 and 4 are described under the assumption that a PW TTL-bypass mode and a VCCV TTL-bypass mode procedures are administratively disabled.

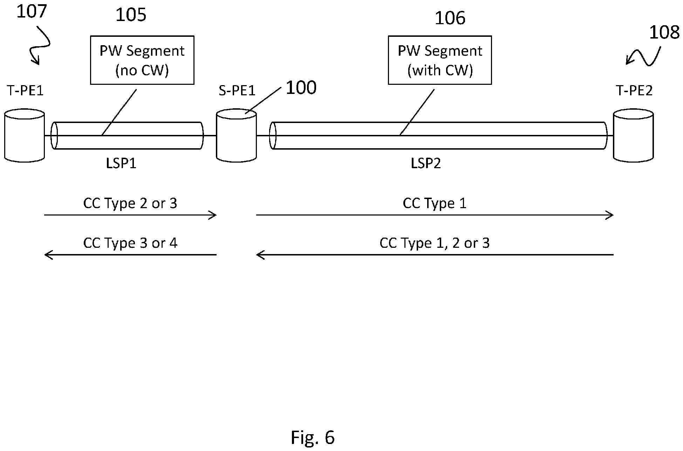

In the following, VCCV stitching signaling is going to be described, in particular with reference to Figs. 6, 8 and 10.

S-PE1 100 negotiates VCCV capabilities with T-PE1 105 and T-PE2 106 following similar procedures as defined in RFC 5085 and RFC 6073.

If the same CW capabilities are negotiated on both PW segments 105, 106, then S-PE1 100 will behave as specified in RFC 6073. VCCV stitching, as defined according to the present disclosure, is enabled if and only if different CW capabilities are negotiated on the two PW segments 105, 106.

If S-PE1 100 supports VCCV stitching for CC Type 3, and it knows the PW-TTL distance to both T-PE1 105 and T-PE2 106 (cf. Fig. 6):
- If T-PE1 105 advertises support for CC Type 3, S-PE1 100 advertises support for CC Type 1 to T-PE2 106.
- If T-PE2 106 advertises support for CC Type 1, S-PE1 100 behaves toward T-PE1 105 as if it supports CC Type 3 and T-PE2 106 has advertised support for CC Type 3, following the procedure defined in RFC 6073.

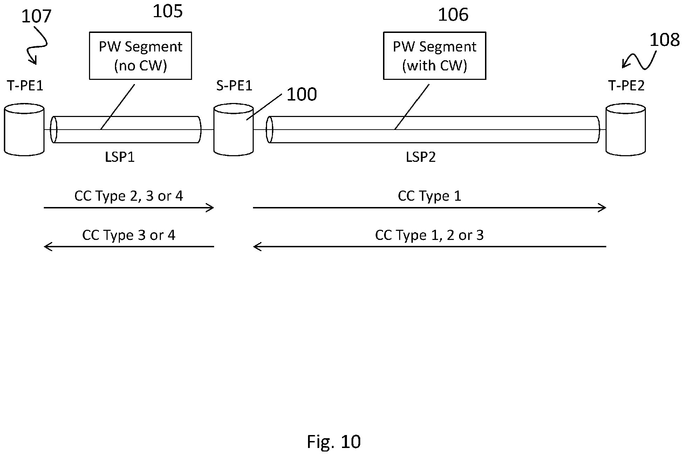

If S-PE1 supports VCCV stitching for CC Type 4 (cf. Fig. 10):
- If T-PE1 105 advertises support for CC Type 4, S-PE1 100 advertises support for CC Type 1 to T-PE2 106.
- If T-PE2 106 advertises support for CC Type 1, S-PE1 100 behaves toward T-PE1 105 as if it supports CC Type 4 and T-PE2 106 has advertised support for CC Type 4, following the procedure defined in RFC 6073.

The above procedures regarding VCCV stitching signaling for CC Type 3 and 4 are described under the assumption that VCCV stitching procedures for CC Type 2 are administratively disabled.

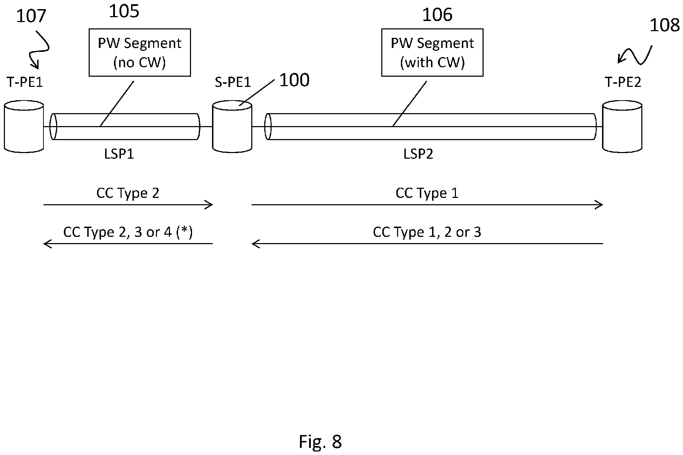

If S-PE1 100 supports VCCV stitching for CC Type 2, and these procedures are administratively enabled e.g., because CC Type 2 is the only CC Type supported by T-PE1 (cf. Fig. 8):
- If T-PE1 105 advertises support for CC Type 2, S-PE1 100 advertises support for CC Type 1 to T-PE2 106.
- If T-PE2 106 advertises support for CC Type 1, S-PE1 100 advertises at least support for CC Type 2 to T-PE1 105.

CV types are advertised based on S-PE1 100 capabilities as per RFC 6073 with the following additional rule:
- S-PE1 100 can advertise support for ACH-based CV types if and only if it supports VCCV stitching for CC Type 4.

This rule ensures that only IP-based CV types are negotiated between T-PE1 105, T-PE2 106 and S-PE1 100 when VCCV stitching for CC Type 3 is used.

If T-PE1 105 supports CC Type 4 and S-PE1 100 supports VCCV stitching for CC Type 4, then VCCV stitching for CC Type 4 is used and both IP-based and ACH-based CV capabilities can be negotiated depending on T-PE1 105, T-PE2 106 and S-PE1 100 CV capabilities.

If T-PE1 105 does not support CC Type 4, it will advertise support only for IP-based CV types and therefore only IP-based CV capabilities can be negotiated depending on T-PE1 105, T-PE2 106 and S-PE1 100 CV capabilities.

If S-PE1 100 does not support VCCV stitching for CC Type 4, it will advertise support only for IP-based CV types and therefore only IP-based CV capabilities can be negotiated depending on T-PE1 105, T-PE2 106 and S-PE1 100 CV capabilities.

S-PE1 100 also supports a TTL-bypass mode, as it is going to be described in the following:
The CW stitching procedures are described under the assumption that PW TTL-bypass mode, VCCV TTL-bypass mode and VCCV stitching for CC Type 2 procedures are administratively disabled. These procedures work exactly in the same way as defined in the above when either the VCCV TTL-bypass mode or the VCCV stitching for CC Type 2 are enabled.

If PW TTL-bypass mode is enabled, S-PE1 100 does not decrement the PW-TTL (for both OAM and data packets) in both directions. To open any forwarding loop, S-PE1 100 instead decrements the LSP-TTL of the received Ethernet PW packets and copies the decremented LSP-TTL in the LSP LSE that it pushes on the forwarded Ethernet PW packets. Therefore, if this mode is configured, S-PE1 100 also disables PHP on both the LSPs that it terminates (from T-PE1 105 and T-PE2 106).

The VCCV stitching procedures are described under the assumption that PW TTL-bypass mode and the VCCV TTL-bypass mode are administratively disabled. If either the PW TTL-bypass mode or the VCCV TTL-bypass mode is enabled, S-PE1 100 does not decrement the PW-TTL of the forwarded VCCV packets in both directions.

To open any forwarding loop, S-PE1 100 instead decrements the LSP-TTL of the received VCCV packets and copies the decremented LSP-TTL in the LSP LSE that it pushes on the forwarded VCCV packets. Therefore, if either one of these modes is configured, S-PE1 100 also disables PHP on both the LSPs it terminates (from T-PE1 105 and T-PE2 106).

Fig. 1 also shows a system 100S according to an embodiment of the present disclosure. The figure in particular shows an MPLS system 100S comprising a first pseudo-wire segment 105 (which can be or can include the T-PE1 105), a second pseudo-wire segment 106 (which can be or can include the T-PE2 106) and an MPLS node 100 (being the S-PE1, or any of the shown S-PE*). The MPLS node 100 that is part of the system 100S can be configured in the forward operating mode and/or the backward operating mode as described above.

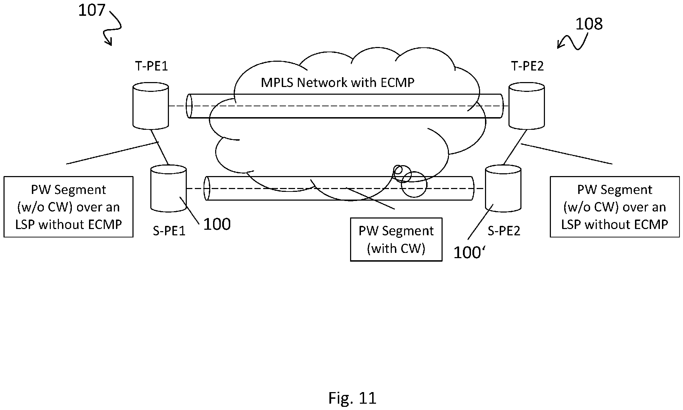

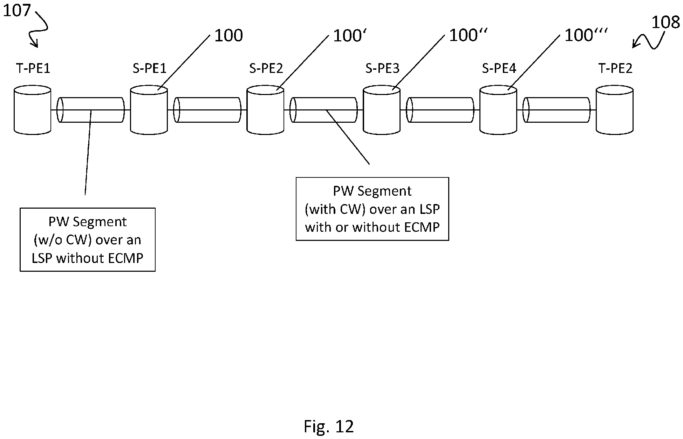

Figs. 11 and 12 also show a system according to an embodiment of the present disclosure, each. The solution of the present disclosure can be used in different deployment scenarios, in addition to the reference network outlined in Fig. 1, without requiring any change to the behavior of the involved S-PE.

Another possible deployment scenario is shown in Fig. 11, where both T-PEs are not capable of inserting the CW: In this scenario, two S-PEs are deployed: S-PE1 100 in front of T-PE1 105 and S-PE2 100' in front of T-PE2 106. S-PE1 100 and S-PE2 100' operate as defined according to the present disclosure: these operation manners are the same even if one or both the PW segments switched by one S-PE are terminated at a T-PE or at another S-PE.

An even more generic deployment scenario is shown in Fig. 12. In this case a MS-PW can be setup with some PW segments using the CW and others not using the CW. S-PE1 100 and S-PE3 100" operate as defined in RFC 6073 while S-PE2 100' and S-PE4 100‴ operate as defined according to the present disclosure: these operation manners are the same even if one or both of the PW segments switched by one S-PE are terminated at a T-PE or at another S-PE operating as defined in RFC 6073 or at another S-PE operating as defined according to the present disclosure.

The operation manners are also the same if the PW segment not using the CW is setup over a link or over an MPLS network.

All operations according to the present disclosure also work if static configuration is used instead of T-LDP to setup some or all the PW segments. These operations also work if dynamic MS-PW signaling procedures, as defined in RFC7267, are used instead of static configuration of the S-PEs.

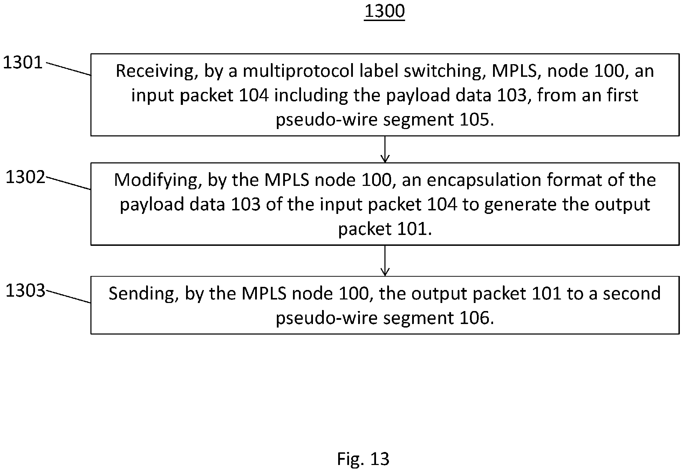

Fig. 13 shows a method 1300 for operating the MPLS node 100. The method 1300 is for sending an output packet 101 including control information 102 and payload data 103, and includes a first step of receiving 1301, by a multiprotocol label switching, MPLS, node 100, an input packet 104 including the payload data 103, from an first pseudo-wire segment 105. The method 1300 includes a second step of modifying, by the MPLS node 100, an encapsulation format of the payload data 103 of the input packet 104 to generate the output packet 101. The method includes a last step of sending, by the MPLS node 100, the output packet 101 to a second pseudo-wire segment 106.

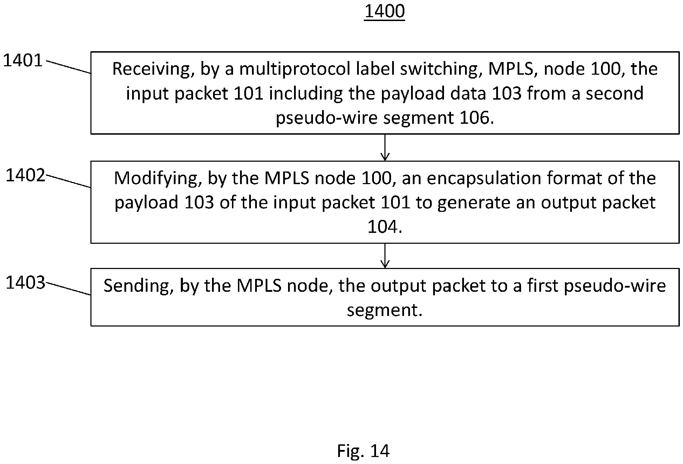

Since the MPLS node 100 can be operated in a forward and/or backward operating mode, Fig. 14 shows a method 1400 for operating the MPLS node 100 in the opposite operating direction compared to method 1300. The method 1400 is for receiving an input packet 101 including control information 102 and payload data 103. The method 1400 includes a first steps of receiving 1401, by a multiprotocol label switching, MPLS, node 100, the input packet 101 including the payload data 103 from a second pseudo-wire segment 106. The method includes a second step of modifying 1402, by the MPLS node 100, an encapsulation format of the payload 103 of the input packet 101 to generate an output packet 104. The method 1400 also includes a last step of sending 1403, by the MPLS node 100, the output packet 104 to a first pseudo-wire segment 105.

The present disclosure has been described in conjunction with various embodiments as examples as well as implementations. However, other variations can be understood and effected by those persons skilled in the art and practicing the claimed disclosure, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. The scope of protection for the invention is defined by the appended claims.

## Claims

1. A multiprotocol label switching, MPLS, node (100) for sending an output packet (101) including control information (102) and payload data (103), wherein the MPLS node (100) is configured to:
- receive an input packet (104) including the payload data (103) and a label stack comprising a pseudo-wire label (201), from a first pseudo-wire segment (105);
- modify an encapsulation format of the payload data (103) of the input packet (104) to generate the output packet (101); and
send the output packet (101) to a second pseudo-wire segment (106);
wherein the modification of the encapsulation of the input packet (104) comprises:
- generating the control information (102); and
- adding at least the control information (102) to the input packet (104) to generate the output packet (101);
wherein generating the output packet (101) further includes:
swapping the pseudo-wire label (201) from the input packet (104) to the output packet (101);
removing a generic associated channel label, GAL, from the input packet (104); and
setting the S-bit of the pseudo-wire label (201) of the output packet (101);
wherein adding the control information (102) to the input packet (104) further includes adding the control information (102) following the bottom of the label stack (202) of the input packet (104);
wherein the control information (102) includes an associated channel header, ACH.

2. The MPLS node (100) according to claim 1, wherein the input packet (104) is a virtual circuit connectivity verification, VCCV packet, and the output packet is a VCCV packet.

3. A multiprotocol label switching, MPLS, node (100) for receiving an input packet (101) including control information (102) and payload data (103), wherein the MPLS node (100) is configured to:
- receive the input packet (101) including the payload data (103) and a label stack comprising a pseudo-wire label (201)
from a second pseudo-wire segment (106);
- modify an encapsulation format of the payload data (103) of the input packet (101) to generate an output packet (104); and
send the output packet (104) to a first pseudo-wire segment (105);
wherein the modification of the encapsulation of the input packet (101) comprises:
- removing at least the control information (102) from the input packet (101) to generate the output packet (104)
wherein generating the output packet (104) further includes:
swapping the pseudo-wire label (201) from the input packet (101) to the output packet (104);
adding a generic associated channel label, GAL, to the input packet (101); and
clearing the S-bit of the pseudo-wire label (201) of the input packet (101);
wherein removing the control information (102) from the input packet (101) further includes removing the control information (102) following the bottom of the label stack (202) of the input packet (101);
wherein the control information (102) includes an associated channel header, ACH.

4. The MPLS node (100) according to claim 3, wherein the input packet (101) is a virtual circuit connectivity verification, VCCV, packet, and the output packet (104) is a VCCV packet.

5. A multiprotocol label switching, MPLS, system comprising a first pseudo-wire segment (105), a second pseudo-wire segment (106) and an MPLS node (100) according to any one of claims 1 to 2, or an MPLS node (100) according to any one of claims 3 to 4.

6. A method (1300) for sending an output packet (101) including control information (102) and payload data (103), the method (1300) including the steps of:
- receiving (1301), by a multiprotocol label switching, MPLS, node (100), an input packet (104) including the payload data (103) and a label stack comprising a pseudo-wire label (201), from an first pseudo-wire segment (105);
- modifying, by the MPLS node (100), an encapsulation format of the payload data (103) of the input packet (104) to generate the output packet (101); and
sending, by the MPLS node (100), the output packet (101) to a second pseudo-wire segment (106);
wherein the modification of the encapsulation of the input packet (104) comprises:
- generating the control information (102); and
- adding at least the control information (102) to the input packet (104) to generate the output packet (101);
wherein generating the output packet (101) further includes:
swapping the pseudo-wire label (201) from the input packet (104) to the output packet (101);
removing a generic associated channel label, GAL, from the input packet (104); and
setting the S-bit of the pseudo-wire label (201) of the output packet (101);
wherein adding the control information (102) to the input packet (104) further includes adding the control information (102) following the bottom of the label stack (202) of the input packet (104);
wherein the control information (102) includes an associated channel header, ACH.

7. A method (1400) for receiving an input packet (101) including control information (102) and payload data (103), the method (1400) including the steps of:
- receiving (1401), by a multiprotocol label switching, MPLS, node (100), the input packet (101) including the payload data (103) and a label stack comprising a pseudo-wire label (201) from a second pseudo-wire segment (106);
- modifying (1402), by the MPLS node (100), an encapsulation format of the payload (103) of the input packet (101) to generate an output packet (104); and
sending (1403), by the MPLS node (100), the output packet (104) to a first pseudo-wire segment (105);
wherein the modification of the encapsulation of the input packet (101) comprises:
- removing at least the control information (102) from the input packet (101) to generate the output packet (104)
wherein generating the output packet (104) further includes:
swapping the pseudo-wire label (201) from the input packet (101) to the output packet (104);
adding a generic associated channel label, GAL, to the input packet (101); and
clearing the S-bit of the pseudo-wire label (201) of the input packet (101);
wherein removing the control information (102) from the input packet (101) further includes removing the control information (102) following the bottom of the label stack (202) of the input packet (101);
wherein the control information (102) includes an associated channel header, ACH.

8. The method according to claim 6 or 7, wherein the input packet (104, 101) is a virtual circuit connectivity verification, VCCV, packet, and the output packet (101, 104) is a VCCV packet.

## Patentansprüche

1. Multiprotocol-Label-Switching(MPLS)-Knoten (100) zum Senden eines Ausgangspakets (101), das Steuerinformationen (102) und Nutzdaten (103) beinhaltet, wobei der MPLS-Knoten (100) zu Folgendem konfiguriert ist:
- Empfangen eines Eingangspakets (104), das die Nutzdaten (103) und einen Label-Stapel beinhaltet, der ein Pseudo-Wire-Label (201) umfasst, von einem ersten Pseudo-Wire-Segment (105);
- Modifizieren eines Kapselungsformats der Nutzdaten (103) des Eingangspakets (104), um das Ausgangspaket (101) zu erzeugen; und
Senden des Ausgangspakets (101) an ein zweites Pseudo-Wire-Segment (106);
wobei die Modifikation der Kapselung des Eingangspakets (104) Folgendes umfasst:
- Erzeugen der Steuerinformationen (102); und
- Hinzufügen mindestens der Steuerinformationen (102) zu dem Eingangspaket (104), um das Ausgangspaket (101) zu erzeugen; wobei das Erzeugen des Ausgangspakets (101) ferner Folgendes beinhaltet:
Austauschen des Pseudo-Wire-Labels (201) von dem Eingangspaket (104) zu dem Ausgangspaket (101);
Entfernen eines generischen assoziierten Kanal-Labels, GAL, von dem Eingangspaket (104); und
Setzen des S-Bits des Pseudo-Wire-Labels (201) des Ausgangspakets (101);
wobei das Hinzufügen der Steuerinformationen (102) zu dem Eingangspaket (104) ferner Hinzufügen der Steuerinformationen (102) nach dem Boden des Label-Stapels (202) des Eingangspakets (104) beinhaltet;
wobei die Steuerinformationen (102) einen assoziierten Kanal-Header, ACH, beinhalten.

2. MPLS-Knoten (100) nach Anspruch 1, wobei das Eingangspaket (104) ein Virtual-Circuit-Connectivity-Verification(VCCV)-Paket ist und das Ausgangspaket ein VCCV-Paket ist.

3. Multiprotocol-Label-Switching(MPLS)-Knoten (100) zum Empfangen eines Eingangspakets (101), das Steuerinformationen (102) und Nutzdaten (103) beinhaltet, wobei der MPLS-Knoten (100) zu Folgendem konfiguriert ist:
- Empfangen des Eingangspakets (101), das die Nutzdaten (103) und einen Label-Stapel beinhaltet, der ein Pseudo-Wire-Label (201) umfasst, von einem zweiten Pseudo-Wire-Segment (106);
- Modifizieren eines Kapselungsformats der Nutzdaten (103) des Eingangspakets (101), um ein Ausgangspaket (104) zu erzeugen; und
Senden des Ausgangspakets (104) an ein erstes Pseudo-Wire-Segment (105);
wobei die Modifikation der Kapselung des Eingangspakets (101) Folgendes umfasst:
- Entfernen mindestens der Steuerinformationen (102) von dem Eingangspaket (101), um das Ausgangspaket (104) zu erzeugen,
wobei das Erzeugen des Ausgangspakets (104) ferner Folgendes beinhaltet:
Austauschen des Pseudo-Wire-Labels (201) von dem Eingangspaket (101) zu dem Ausgangspaket (104);
Hinzufügen eines generischen assoziierten Kanal-Labels, GAL, zu dem Eingangspaket (101); und
Löschen des S-Bits des Pseudo-Wire-Labels (201) des Eingangspakets (101);
wobei das Entfernen der Steuerinformationen (102) von dem Eingangspaket (101) ferner Entfernen der Steuerinformationen (102) nach dem Boden des Label-Stapels (202) des Eingangspakets (101) beinhaltet;
wobei die Steuerinformationen (102) einen assoziierten Kanal-Header, ACH, beinhalten.

4. MPLS-Knoten (100) nach Anspruch 3, wobei das Eingangspaket (101) ein Virtual-Circuit-Connectivity-Verification(VCCV)-Paket ist und das Ausgangspaket (104) ein VCCV-Paket ist.

5. Multiprotocol-Label-Switching(MPLS)-System, umfassend ein erstes Pseudo-Wire-Segment (105), ein zweites Pseudo-Wire-Segment (106) und einen MPLS-Knoten (100) nach einem der Ansprüche 1 bis 2 oder einen MPLS-Knoten (100) nach einem der Ansprüche 3 bis 4.

6. Verfahren (1300) zum Senden eines Ausgangspakets (101), das Steuerinformationen (102) und Nutzdaten (103) beinhaltet, wobei das Verfahren (1300) die folgenden Schritte beinhaltet:
- Empfangen (1301), durch einen Multiprotocol-Label-Switching(MPLS)-Knoten (100), eines Eingangspakets (104), das die Nutzdaten (103) und einen Label-Stapel beinhaltet, der ein Pseudo-Wire-Label (201) umfasst, von einem ersten Pseudo-Wire-Segment (105);
- Modifizieren, durch den MPLS-Knoten (100), eines Kapselungsformats der Nutzdaten (103) des Eingangspakets (104), um das Ausgangspaket (101) zu erzeugen; und
Senden, durch den MPLS-Knoten (100), des Ausgangspakets (101) an ein zweites Pseudo-Wire-Segment (106);
wobei die Modifikation der Kapselung des Eingangspakets (104) Folgendes umfasst:
- Erzeugen der Steuerinformationen (102); und
- Hinzufügen mindestens der Steuerinformationen (102) zu dem Eingangspaket (104), um das Ausgangspaket (101) zu erzeugen;
wobei das Erzeugen des Ausgangspakets (101) ferner Folgendes beinhaltet:
Austauschen des Pseudo-Wire-Labels (201) von dem Eingangspaket (104) zu dem Ausgangspaket (101);
Entfernen eines generischen assoziierten Kanal-Labels, GAL, von dem Eingangspaket (104); und
Setzen des S-Bits des Pseudo-Wire-Labels (201) des Ausgangspakets (101);
wobei das Hinzufügen der Steuerinformationen (102) zu dem Eingangspaket (104) ferner Hinzufügen der Steuerinformationen (102) nach dem Boden des Label-Stapels (202) des Eingangspakets (104) beinhaltet;
wobei die Steuerinformationen (102) einen assoziierten Kanal-Header, ACH, beinhalten.

7. Verfahren (1400) zum Empfangen eines Eingangspakets (101), das Steuerinformationen (102) und Nutzdaten (103) beinhaltet, wobei das Verfahren (1400) die folgenden Schritte beinhaltet:
- Empfangen (1401), durch einen Multiprotocol-Label-Switching(MPLS)-Knoten (100), des Eingangspakets (101), das die Nutzdaten (103) und einen Label-Stapel beinhaltet, der ein Pseudo-Wire-Label (201) umfasst, von einem zweiten Pseudo-Wire-Segment (106);
- Modifizieren (1402), durch den MPLS-Knoten (100), eines Kapselungsformats der Nutzdaten (103) des Eingangspakets (101), um ein Ausgangspaket (104) zu erzeugen; und
Senden (1403), durch den MPLS-Knoten (100), des Ausgangspakets (104) an ein erstes Pseudo-Wire-Segment (105);
wobei die Modifikation der Kapselung des Eingangspakets (101) Folgendes umfasst:
- Entfernen mindestens der Steuerinformationen (102) von dem Eingangspaket (101), um das Ausgangspaket (104) zu erzeugen, wobei das Erzeugen des Ausgangspakets (104) ferner Folgendes beinhaltet:
Austauschen des Pseudo-Wire-Labels (201) von dem Eingangspaket (101) zu dem Ausgangspaket (104);
Hinzufügen eines generischen assoziierten Kanal-Labels, GAL, zu dem Eingangspaket (101); und
Löschen des S-Bits des Pseudo-Wire-Labels (201) des Eingangspakets (101);
wobei das Entfernen der Steuerinformationen (102) von dem Eingangspaket (101) ferner Entfernen der Steuerinformationen (102) nach dem Boden des Label-Stapels (202) des Eingangspakets (101) beinhaltet;
wobei die Steuerinformationen (102) einen assoziierten Kanal-Header, ACH, beinhalten.

8. Verfahren nach Anspruch 6 oder 7, wobei das Eingangspaket (104, 101) ein Virtual-Circuit-Connectivity-Verification(VCCV)-Paket ist und das Ausgangspaket (101, 104) ein VCCV-Paket ist.

## Revendications

1. Nœud de commutation multiprotocole par étiquette, MPLS, (100) destiné à envoyer un paquet de sortie (101) comportant des informations de contrôle (102) et des données de charge utile (103), dans lequel le nœud MPLS (100) est configuré pour :
- recevoir un paquet d'entrée (104) comportant les données de charge utile (103) et une pile d'étiquettes comprenant une étiquette de pseudo-fil (201), à partir d'un premier segment de pseudo-fil (105) ;
- modifier un format d'encapsulation des données de charge utile (103) du paquet d'entrée (104) pour générer le paquet de sortie (101) ; et
envoyer le paquet de sortie (101) à un second segment de pseudo-fil (106) ;
dans lequel la modification de l'encapsulation du paquet d'entrée (104) comprend :
- la génération des informations de contrôle (102) ; et
- l'ajout au moins des informations de contrôle (102) au paquet d'entrée (104) pour générer le paquet de sortie (101) ; dans lequel la génération du paquet de sortie (101) comporte également :
l'échange de l'étiquette de pseudo-fil (201) du paquet d'entrée (104) au paquet de sortie (101) ;
la suppression d'une étiquette de canal générique associée, GAL, du paquet d'entrée (104) ; et
le réglage du bit S de l'étiquette du pseudo-fil (201) du paquet de sortie (101) ;
dans lequel l'ajout des informations de contrôle (102) au paquet d'entrée (104) comporte également l'ajout des informations de contrôle (102) après le bas de la pile d'étiquettes (202) du paquet d'entrée (104) ;
dans lequel les informations de contrôle (102) comportent un en-tête de canal associé, ACH.

2. Nœud MPLS (100) selon la revendication 1, dans lequel le paquet d'entrée (104) est un paquet de vérification de connectivité de circuit virtuel, VCCV, et le paquet de sortie est un paquet VCCV.

3. Nœud de commutation multiprotocole par étiquette, MPLS, (100) destiné à recevoir un paquet d'entrée (101) comportant des informations de contrôle (102) et des données de charge utile (103), dans lequel le nœud MPLS (100) est configuré pour :
- recevoir le paquet d'entrée (101) comportant les données de charge utile (103) et une pile d'étiquettes comprenant une étiquette de pseudo-fil (201) à partir d'un second segment de pseudo-fil (106) ;
- modifier un format d'encapsulation des données de charge utile (103) du paquet d'entrée (101) pour générer un paquet de sortie (104) ; et
envoyer le paquet de sortie (104) à un premier segment de pseudo-fil (105) ;
dans lequel la modification de l'encapsulation du paquet d'entrée (101) comprend :
- la suppression d'au moins les informations de contrôle (102) du paquet d'entrée (101) pour générer le paquet de sortie (104)
dans lequel la génération du paquet de sortie (104) comporte également :
l'échange de l'étiquette de pseudo-fil (201) du paquet d'entrée (101) au paquet de sortie (104) ;
l'ajout d'une étiquette de canal générique associée, GAL, au paquet d'entrée (101) ; et
l'effacement du bit S de l'étiquette du pseudo-fil (201) du paquet d'entrée (101) ;
dans lequel la suppression des informations de contrôle (102) du paquet d'entrée (101) comporte également la suppression des informations de contrôle (102) après le bas de la pile d'étiquettes (202) du paquet d'entrée (101) ;
dans lequel les informations de contrôle (102) comportent un en-tête de canal associé, ACH.

4. Nœud MPLS (100) selon la revendication 3, dans lequel le paquet d'entrée (101) est un paquet de vérification de connectivité de circuit virtuel, VCCV, et le paquet de sortie (104) est un paquet VCCV.

5. Système de commutation multiprotocole par étiquette, MPLS, comprenant un premier segment de pseudo-fil (105), un second segment de pseudo-fil (106) et un nœud MPLS (100) selon l'une quelconque des revendications 1 à 2, ou un nœud MPLS (100) selon l'une quelconque des revendications 3 à 4.

6. Procédé (1300) pour envoyer un paquet de sortie (101) comportant des informations de contrôle (102) et des données de charge utile (103), le procédé (1300) comportant les étapes suivantes :
- la réception (1301), par un nœud de commutation d'étiquette multiprotocole MPLS (100), d'un paquet d'entrée (104) comportant les données de charge utile (103) et une pile d'étiquettes comprenant une étiquette de pseudo-fil (201), à partir d'un premier segment de pseudo-fil (105) ;
- la modification, par le nœud MPLS (100), d'un format d'encapsulation des données de charge utile (103) du paquet d'entrée (104) pour générer le paquet de sortie (101) ; et l'envoi, par le nœud MPLS (100), du paquet de sortie (101) à un second segment de pseudo-fil (106) ;
dans lequel la modification de l'encapsulation du paquet d'entrée (104) comprend :
- la génération des informations de contrôle (102) ; et
- l'ajout au moins des informations de contrôle (102) au paquet d'entrée (104) pour générer le paquet de sortie (101) ; dans lequel la génération du paquet de sortie (101) comporte également :
l'échange de l'étiquette de pseudo-fil (201) du paquet d'entrée (104) au paquet de sortie (101) ;
la suppression d'une étiquette de canal générique associée, GAL, du paquet d'entrée (104) ; et
le réglage du bit S de l'étiquette du pseudo-fil (201) du paquet de sortie (101) ;
dans lequel l'ajout des informations de contrôle (102) au paquet d'entrée (104) comporte également l'ajout des informations de contrôle (102) après le bas de la pile d'étiquettes (202) du paquet d'entrée (104) ;
dans lequel les informations de contrôle (102) comportent un en-tête de canal associé, ACH.

7. Procédé (1400) pour recevoir un paquet d'entrée (101) comportant des informations de contrôle (102) et des données de charge utile (103), le procédé (1400) comportant les étapes suivantes :
- la réception (1401), par un nœud de commutation d'étiquette multiprotocole MPLS (100), du paquet d'entrée (101) comportant les données de charge utile (103) et une pile d'étiquettes comprenant une étiquette de pseudo-fil (201) à partir d'un second segment de pseudo-fil (106) ;
- la modification (1402), par le nœud MPLS (100), d'un format d'encapsulation de la charge utile (103) du paquet d'entrée (101) pour générer un paquet de sortie (104) ; et
l'envoi (1403), par le nœud MPLS (100), du paquet de sortie (104) à un premier segment de pseudo-fil (105) ;
dans lequel la modification de l'encapsulation du paquet d'entrée (101) comprend :
- la suppression d'au moins les informations de contrôle (102) du paquet d'entrée (101) pour générer le paquet de sortie (104)
dans lequel la génération du paquet de sortie (104) comporte également :
l'échange de l'étiquette de pseudo-fil (201) du paquet d'entrée (101) au paquet de sortie (104) ;
l'ajout d'une étiquette de canal générique associée, GAL, au paquet d'entrée (101) ; et
l'effacement du bit S de l'étiquette du pseudo-fil (201) du paquet d'entrée (101) ;
dans lequel la suppression des informations de contrôle (102) du paquet d'entrée (101) comporte également la suppression des informations de contrôle (102) après le bas de la pile d'étiquettes (202) du paquet d'entrée (101) ;
dans lequel les informations de contrôle (102) comportent un en-tête de canal associé, ACH.

8. Procédé selon la revendication 6 ou 7, dans lequel le paquet d'entrée (104, 101) est un paquet de vérification de connectivité de circuit virtuel, VCCV, et le paquet de sortie (101, 104) est un paquet VCCV.
